# EUROPEAN PATENT APPLICATION

(11) **EP 4 428 981 A1**
(43) Date of publication of application: **11.09.2024**
(21) Application number: 24722456.1
(22) Date of filing: 24.01.2024
(51) Int. Cl.: H01M 10/0567, H01M 10/054

(54) **ELECTROLYTE, AND ELECTROCHEMICAL DEVICE AND SECONDARY BATTERY USING SAME**

(30) Priority: 25.01.2023 JP 2023009153
(71) Applicant: Daikin Industries, Ltd., Osaka-shi, Osaka 530-0001 (JP)
(72) Inventor: HIDAKA, Tomoya, Osaka-shi, Osaka 530-0001 (JP); TERADA, Junpei, Osaka-shi, Osaka 530-0001 (JP); FUJIWARA, Kae, Osaka-shi, Osaka 530-0001 (JP); YAMAZAKI, Shigeaki, Osaka-shi, Osaka 530-0001 (JP)
(74) Representative: Hoffmann Eitle
(86) International application number: PCT/JP2024/002057
(87) International publication number: WO 2024/158009

(57) **Abstract**

Provided are an electrolytic solution that enables improvement in durability of an electrochemical device, reduction of the amount of gas generated therein, and reduction of the amount of metal precipitated therein, and an electrochemical device and a secondary battery using the electrolytic solution. An electrolytic solution including at least one compound represented by the following general formula (1):

Rf¹OR (1)

wherein Rf¹ is a fluorinated alkyl group having 1 to 5 carbon atoms, and R is K or Na.

## Description

### Technical Field

The present disclosure relates to electrolytic solutions, and electrochemical devices and secondary batteries using the same.

### Background Art

With weight reduction and miniaturization of electrical products in recent years, demands for electrochemical devices such as secondary batteries have rapidly increased. Further, the electrical products have been upgraded to have unprecedented functions imparted thereto, and thus, there is a growing need for electrochemical devices that may withstand use under harsh conditions for a longer period of time.

It has been proposed to obtain, by incorporating a specific additive, an electrolytic solution that has a high capacity retention, suppresses elution from a positive electrode and makes a gas unlikely to be generated even when electrochemical devices such as lithium ion secondary batteries are stored at a high temperature (Patent Literature 1).

Further, studies of sodium ion secondary batteries using a sodium ion as a charge carrier have been made. Since sodium is abundant and is inexpensively available as compared with lithium, the sodium ion secondary battery has attracted attention as a secondary battery that can be made low-cost and large-sized. For example, a non-aqueous electrolytic solution for sodium ion secondary batteries, which contains a boron compound having a specific structure, has been proposed as an electrolytic solution suitable for sodium ion secondary batteries (Patent Literature 2). Furthermore, a non-aqueous electrolytic solution for sodium ion secondary batteries, which contains dioxathiolane having a specific structure, has been proposed (Patent Literature 3).

### Citation List

### Patent Literature

Patent Literature 1
   International Publication No. WO 2019/003780
Patent Literature 2
   Japanese Patent Laid-Open No. 2016-85890
Patent Literature 3
   Japanese Patent Laid-Open No. 2019-46614

### Summary of Invention

### Technical Problem

The present disclosure aims to provide an electrolytic solution that enables improvement in durability of an electrochemical device, reduction of the amount of gas generated therein, and reduction of the amount of metal precipitated therein, and an electrochemical device and a secondary battery using the electrolytic solution.

### Solution to Problem

The present disclosure relates to an electrolytic solution comprising at least one compound represented by the following general formula (1):

Rf¹OR (1)

wherein Rf¹ is a fluorinated alkyl group having 1 to 5 carbon atoms, and R is Na or K.

Rf¹ of the compound represented by the general formula (1) is preferably any of the following formulas (1a) to (1e).

(1a) CF₂HCF₂

(1b) CF₂HCF₂CH₂

(1c) CF₃CHFCF₂

(1d) CF₃CF₂CH₂

(1e) CF₂HCF₂CF₂CF₂CH₂

A content of the compound represented by the general formula (1) is preferably 0.01 to 10,000 ppm with respect to the whole electrolytic solution.

The electrolytic solution preferably further comprises a compound represented by the following general formula (2):

Rf²ORf³ (2)

wherein Rf² and Rf³ are each independently a fluorinated alkyl group having 1 to 4 carbon atoms.

The compound represented by the general formula (2) is preferably at least one selected from the group consisting of CF₂HCF₂CH₂OCF₂CF₂H, CF₂HCF₂CH₂OCF₂CHFCF₃, and CF₃CF₂CH₂OCF₂CF₂H.

A content of the compound represented by the general formula (2) is preferably 0.1 to 90% by mass with respect to the whole electrolytic solution.

The content of the compound represented by the general formula (1) is preferably 0.0000001 to 10% by mass with respect to the compound represented by the general formula (2).

The content of the compound represented by the general formula (2) is preferably 0.1 to 75% by mass with respect to the whole electrolytic solution, and the content of the compound represented by the general formula (1) is preferably 0.001 to 5% by mass with respect to the compound represented by the general formula (2).

The compound represented by the general formula (1) is preferably CF₂HCF₂CH₂ONa.

The compound represented by the general formula (2) is preferably CF₂HCF₂CH₂OCF₂CF₂H.

The present disclosure also relates to an electrochemical device comprising the electrolytic solution mentioned above.

The present disclosure also relates to a secondary battery comprising the electrolytic solution mentioned above.

The present disclosure also relates to a sodium ion secondary battery comprising the electrolytic solution mentioned above.

### Advantageous Effects of Invention

The present disclosure can provide an electrolytic solution that enables improvement in durability of an electrochemical device, reduction of the amount of gas generated therein, and reduction of the amount of metal precipitated therein. An electrochemical device and a secondary battery each of which uses the electrolytic solution of the present disclosure will be improved in durability and will be reduced in the amount of gas generated.

### Description of Embodiments

Hereinafter, the present disclosure will be described in detail.

The electrolytic solution of the present disclosure contains at least one compound represented by the following general formula (1):

Rf¹OR (1)

wherein Rf¹ is a fluorinated alkyl group having 1 to 5 carbon atoms, and R is Na or K.

In the present disclosure, incorporation of the specific alkali metal fluorinated alkoxide mentioned above in an electrolytic solution for an electrochemical device can improve durability of the electrochemical device, namely cycle characteristics (such as capacity retention after cycle), and can reduce the amount of gas generated and can reduce the amount of metal precipitated during the cycle of the electrochemical device.

### (Alkali metal fluorinated alkoxide)

The electrolytic solution of the present disclosure contains a compound represented by the following general formula (1):

Rf¹OR (1)

wherein Rf¹ is a fluorinated alkyl group having 1 to 5 carbon atoms, and R is Na or K.

Rf¹ of the compound represented by the general formula (1) is preferably any of the following formulas (1a) to (1e) because of being advantageous from the viewpoint of protection of a positive electrode.

(1a) CF₂HCF₂

(1b) CF₂HCF₂CH₂

(1c) CF₃CHFCF₂

(1d) CF₃CF₂CH₂

(1e) CF₂HCF₂CF₂CF₂CH₂

The compound represented by the general formula (1) is particularly preferably CF₂HCF₂CH₂ONa in respect of cycle characteristics, suppression of the amount of gas generated, and suppression of the amount of metal precipitated.

The content of the compound represented by the general formula (1) is preferably 0.01 to 10,000 ppm with respect to the whole electrolytic solution. When having a content in this range, the electrochemical device becomes particularly excellent in the cycle characteristics, suppression of the amount of gas generated, and suppression of the amount of metal precipitated.

The lower limit of the content of the compound represented by the general formula (1) is more preferably 0.1 ppm, further preferably 1 ppm, particularly preferably 10 ppm. The upper limit of the content of the compound represented by the general formula (1) is more preferably 1,000 ppm, further preferably 100 ppm.

The compound represented by the general formula (1) may be produced by a known method. For example, the compound is obtained by causing a fluorinated alcohol (Rf¹OH) and Na or K to react with each other in the presence of a catalyst.

### (Fluorinated ether)

The electrolytic solution of the present disclosure preferably further contains a compound represented by the following general formula (2) (sometimes also referred to as a fluorinated ether (2) hereinafter):

Rf²ORf³ (2)

wherein Rf² and Rf³ are each independently a fluorinated alkyl group having 1 to 8 carbon atoms.

When the fluorinated ether (2) is contained, the flame retardancy of the electrolytic solution is improved, and additionally, the stability and safety thereof at a high temperature and at a high voltage are improved. Further, improvement in durability of an electrochemical device, and suppression of the amount of gas generated and suppression of the amount of metal precipitated during the cycle of an electrochemical device are made more possible.

The fluorinated alkyl group is a fluorinated alkyl group having 1 to 8 carbon atoms. In particular, preferred is a fluorinated alkyl group having 1 to 4 carbon atoms, and more preferred is a fluorinated alkyl group having 2 to 3 carbon atoms.

If the number of carbon atoms of the fluorinated alkyl group is excessively small, the boiling point tends to lower, and if the number of carbon atoms thereof is excessively large, the solubility of an electrolyte salt may decrease, the miscibility with other solvent may begin to be adversely affected, and the rate characteristics tend to deteriorate due to increase in the viscosity. A case where Rf² has 3 or 4 carbon atoms and Rf³ has 2 or 3 carbon atoms is advantageous, in view of an excellent boiling point and excellent rate characteristics.

The fluorinated ether (2) preferably has a fluorine content of 40 to 75% by mass. When having a fluorine content in this range, the fluorinated ether (2) has a particularly excellent balance between non-flammability and miscibility. Having the above range is also preferred in view of favorable oxidation resistance and safety.

The lower limit of the fluorine content is more preferably 45% by mass, further preferably 50% by mass, particularly preferably 55% by mass. The upper limit is more preferably 70% by mass, further preferably 66% by mass.

The fluorine content in the fluorinated ether (2) is a value calculated based on the structural formula of the fluorinated ether (2) by [(Number of fluorine atoms × 19)/Molecular weight of fluorinated ether (2)] × 100 (%).

Examples of Rf² include CF₃CF₂CH₂-, CF₃CFHCF₂-, HCF₂CF₂CF₂-, HCF₂CF₂CH₂-, CF₃CF₂CH₂CH₂-, CF₃CFHCF₂CH₂-, HCF₂CF₂CF₂CF₂-, HCF₂CF₂CF₂CH₂-, HCF₂CF₂CH₂CH₂-, and HCF₂CF(CF₃)CH₂-.

Examples of Rf³ include -CH₂CF₂CF₃, -CF₂CFHCF₃, - CF₂CF₂CF₂H, -CH₂CF₂CF₂H, -CH₂CH₂CF₂CF₃, -CH₂CF₂CFHCF₃, - CF₂CF₂CF₂CF₂H, -CH₂CF₂CF₂CF₂H, -CH₂CH₂CF₂CF₂H, - CH₂CF(CF₃)CF₂H, -CF₂CF₂H, -CH₂CF₂H, -CH₂CF₃, and -CF₂CH₃.

Specific examples of the fluorinated ether (2) include HCF₂CF₂CH₂OCF₂CF₂H, CF₃CF₂CH₂OCF₂CF₂H, HCF₂CF₂CH₂OCF₂CFHCF₃, CF₃CF₂CH₂OCF₂CFHCF₃, C₆F₁₃OCH₃, C₆F₁₃OC₂H₅, C₈H₁₇OCH₃, C₈F₁₇OC₂H₅, CF₃CFHCF₂CH(CH₃)OCF₂CFHCF₃, HCF₂CF₂OCH(C₂H₅)₂, HCF₂CF₂OC₄H₉, HCF₂CF₂OCH₂CH(C₂H₅)₂, and HCF₂CF₂OCH₂CH(CH₃)₂.

The fluorinated ether (2) is particularly preferably at least one selected from the group consisting of CF₂HCF₂CH₂OCF₂CF₂H, HCF₂CF₂CH₂OCF₂CFHCF₃, and CF₃CF₂CH₂OCF₂CF₂H because of being advantageous in view of flame retardancy.

Among these, CF₂HCF₂CH₂OCF₂CF₂H is more preferred.

The content of the fluorinated ether (2) is preferably 0.1 to 90% by mass with respect to the whole electrolytic solution. With a content in this range, the electrolytic solution can be favorably used. In other words, if the content is increased, the amount of metal precipitated, the metal being derived from an active material, is reduced, but the viscosity of the electrolytic solution increases and the ion conductivity decreases, and hence, the battery life tends to decrease.

The lower limit thereof is more preferably 0.5% by mass, further preferably 1% by mass. The upper limit thereof is more preferably 80% by mass, further preferably 75% by mass, particularly preferably 50% by mass.

The content of the compound represented by the general formula (1) is preferably 0.0000001 to 10% by mass with respect to the compound represented by the general formula (2). The lower limit thereof is more preferably 0.001% by mass, further preferably 0.01% by mass. The upper limit thereof is more preferably 5% by mass, further preferably 1% by mass, particularly preferably 0.5% by mass.

The electrolytic solution of the present disclosure preferably contains a solvent.

The solvent preferably contains at least one selected from the group consisting of a carbonate and a carboxylate.

The carbonate may be a cyclic carbonate or a chain carbonate.

The cyclic carbonate may be a non-fluorinated cyclic carbonate or a fluorinated cyclic carbonate.

An example of the non-fluorinated cyclic carbonate includes a non-fluorinated saturated cyclic carbonate. Preferred is a non-fluorinated saturated alkylene carbonate having an alkylene group having 2 to 6 carbon atoms, and more preferred is a non-fluorinated saturated alkylene carbonate having an alkylene group having 2 to 4 carbon atoms.

Of these, in respect of high permittivity and a suitable viscosity, the non-fluorinated saturated cyclic carbonate is preferably at least one selected from the group consisting of ethylene carbonate, propylene carbonate, cis-2,3-pentylene carbonate, cis-2,3-butylene carbonate, 2,3-pentylene carbonate, 2,3-butylene carbonate, 1,2-pentylene carbonate, 1,2-butylene carbonate, and butylene carbonate.

One of the non-fluorinated saturated cyclic carbonates may be used singly, or two or more thereof may be used in any combination at any ratio.

When the non-fluorinated saturated cyclic carbonate is contained, the content of the non-fluorinated saturated cyclic carbonate is preferably 5 to 90% by volume, more preferably, 10 to 60% by volume, further preferably, 15 to 50% by volume with respect to the solvent.

The fluorinated cyclic carbonate is a cyclic carbonate having a fluorine atom. A solvent containing a fluorinated cyclic carbonate can be suitably used also at a high voltage.

The term "high voltage" herein means a voltage of 4.2 V or more. The upper limit of the "high voltage" is preferably 4.9 V.

The fluorinated cyclic carbonate may be a fluorinated saturated cyclic carbonate or a fluorinated unsaturated cyclic carbonate.

The fluorinated saturated cyclic carbonate is a saturated cyclic carbonate having a fluorine atom. Specific examples thereof include a compound represented by the following general formula (A): 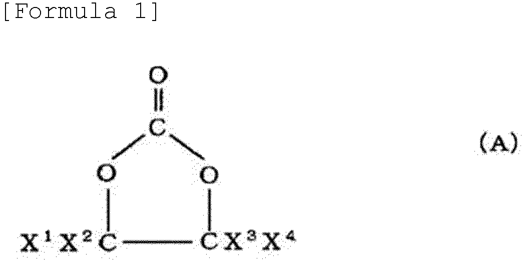 wherein X¹ to X⁴ are the same as or different from each other, and are each -H, -CH₃, -C₂H₅, -F, a fluorinated alkyl group optionally having an ether bond, or a fluorinated alkoxy group optionally having an ether bond; provided that at least one of X¹ to X⁴ is -F, a fluorinated alkyl group optionally having an ether bond, or a fluorinated alkoxy group optionally having an ether bond. Examples of the fluorinated alkyl group include - CF₃, -CF₂H, and -CH₂F.

In the case where the electrolytic solution of the present disclosure, when containing the fluorinated saturated cyclic carbonate, is applied to a high-voltage lithium ion secondary battery or the like, the oxidation resistance of the electrolytic solution can be improved, and stable and excellent charge and discharge characteristics can be provided.

The term "ether bond" herein means a bond represented by -O-.

In respect of favorable permittivity and oxidation resistance, one or two of X¹ to X⁴ is/are each preferably -F, a fluorinated alkyl group optionally having an ether bond, or a fluorinated alkoxy group optionally having an ether bond.

In anticipation of decrease in a viscosity at low temperature, increase in the flash point, and improvement in the solubility of an electrolyte salt, X¹ to X⁴ are each preferably -H, -F, a fluorinated alkyl group (a), a fluorinated alkyl group having an ether bond (b), or a fluorinated alkoxy group (c).

The fluorinated alkyl group (a) is a group obtainable by replacing at least one hydrogen atom of an alkyl group by a fluorine atom. The fluorinated alkyl group (a) has preferably 1 to 20 carbon atoms, more preferably 1 to 17 carbon atoms, further preferably 1 to 7 carbon atoms, particularly preferably 1 to 5 carbon atoms.

An excessively large number of carbon atoms may lead to deterioration of the low-temperature characteristics and decrease in the solubility of an electrolyte salt. An excessively small number carbon atoms may lead to decrease in the solubility of an electrolyte salt, decrease in the discharge efficiency, further increase in the viscosity, and the like.

Examples of the fluorinated alkyl group (a) having 1 carbon atom include CFH₂-, CF₂H-, and CF₃-. In respect of high-temperature storage characteristics, particularly preferred is CF₂H- or CF₃-, and most preferred is CF₃-.

The fluorinated alkyl group (a), the fluorinated alkyl group having an ether bond (b), and the fluorinated alkoxy group (c) in the fluorinated saturated cyclic carbonate each preferably have a fluorine content of 10% by mass or more. An excessively low fluorine content may not sufficiently achieve an effect of reducing the viscosity at low temperature and an effect of increasing the flash point. From this viewpoint, the fluorine content is more preferably 12% by mass or more, further preferably 15% by mass or more. The upper limit thereof is usually 76% by mass.

The fluorine content of each of the fluorinated alkyl group (a), the fluorinated alkyl group having an ether bond (b), and the fluorinated alkoxy group (c) is a value calculated based on each structural formula thereof by: [ (Number of fluorine atom(s)×19) / (Formula weight of each group) ]×100 (%).

In view of favorable permittivity and oxidation resistance, the fluorine content in the total fluorinated saturated cyclic carbonate is preferably 10% by mass or more, more preferably 15% by mass or more. The upper limit thereof is usually 76% by mass.

The fluorine content in the fluorinated saturated cyclic carbonate is a value calculated based on the structural formula of the fluorinated saturated cyclic carbonate by [(Number of fluorine atom(s) × 19)/Molecular weight of fluorinated saturated cyclic carbonate] × 100 (%).

Specific examples of the fluorinated saturated cyclic carbonate include the following.

Specific examples of the fluorinated saturated cyclic carbonate in which at least one of X¹ to X⁴ is -F include: 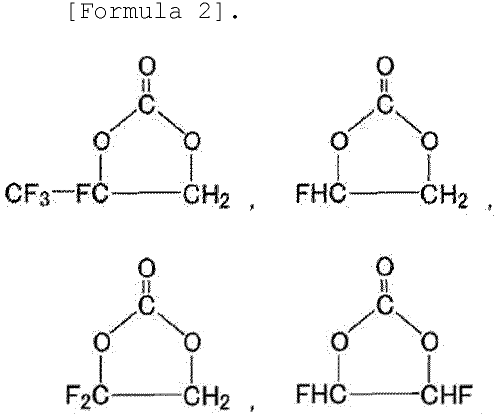 These compounds have a high withstand voltage and also give favorable solubility of an electrolyte salt.

Among these, the fluorinated saturated cyclic carbonate is preferably any of the following compounds.

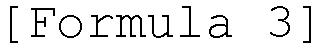

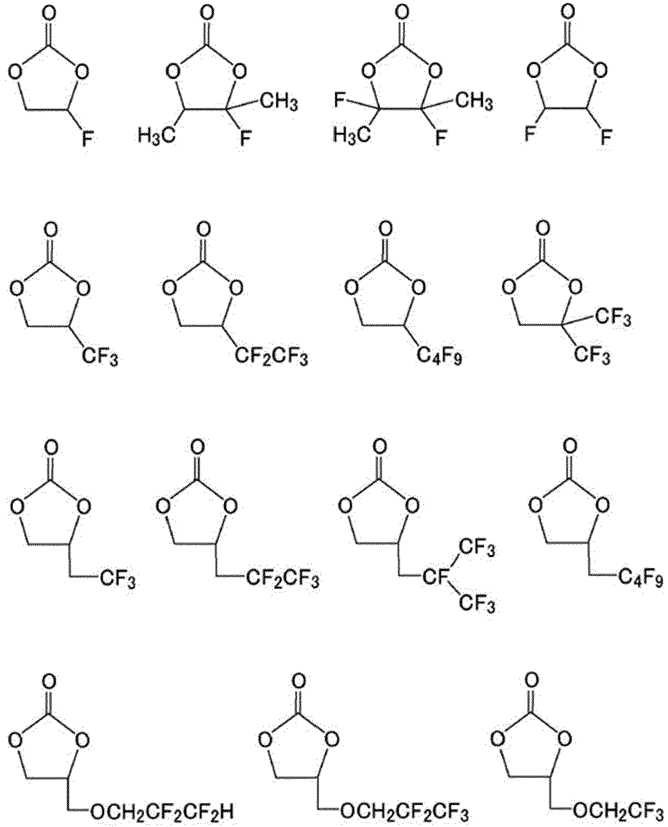

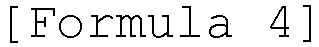

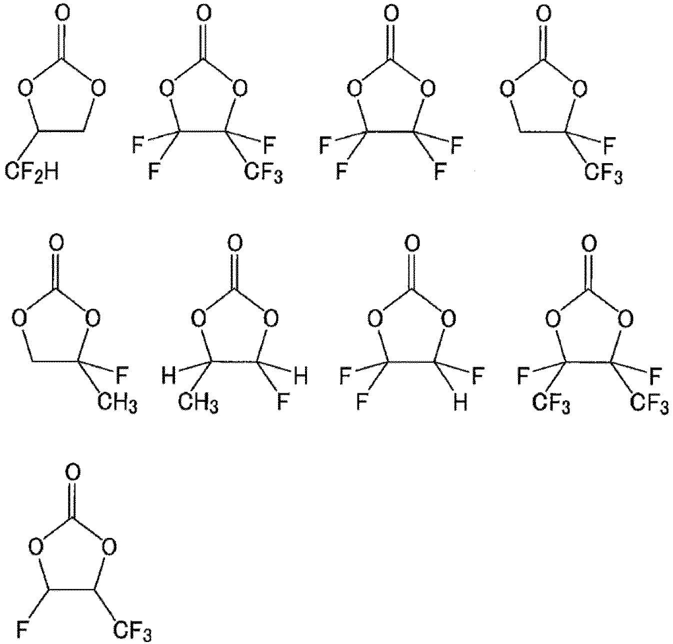

More preferred among these as the fluorinated saturated cyclic carbonate are fluoroethylene carbonate, difluoroethylene carbonate, trifluoromethylethylene carbonate (3,3,3-trifluoropropylene carbonate), and 2,2,3,3,3-pentafluoropropylethylene carbonate.

One of the fluorinated cyclic carbonates may be used singly, or two or more thereof may be used in any combination at any ratio.

When the fluorinated cyclic carbonate is contained, the content of the fluorinated cyclic carbonate is preferably 5 to 90% by volume, more preferably 10 to 60% by volume, further preferably 15 to 45% by volume with respect to the solvent.

The chain carbonate may be a non-fluorinated chain carbonate or a fluorinated chain carbonate.

Examples of the non-fluorinated chain carbonate include hydrocarbon-based chain carbonates such as CH₃OCOOCH₃ (dimethyl carbonate, DMC), CH₃CH₂OCOOCH₂CH₃ (diethyl carbonate, DEC), CH₃CH₂OCOOCH₃ (ethyl methyl carbonate, EMC), CH₃OCOOCH₂CH₂CH₃ (methyl propyl carbonate), methyl butyl carbonate, ethyl propyl carbonate, ethyl butyl carbonate, dipropyl carbonate, dibutyl carbonate, methyl isopropyl carbonate, methyl-2-phenyl phenyl carbonate, phenyl-2-phenyl phenyl carbonate, trans-2,3-pentylene carbonate, trans-2,3-butylene carbonate, and ethyl phenyl carbonate. Preferred among these is at least one selected from the group consisting of ethyl methyl carbonate, diethyl carbonate, and dimethyl carbonate.

One of the non-fluorinated chain carbonates may be used singly, or two or more thereof may be used in any combination at any ratio.

When the non-fluorinated chain carbonate is contained, the content of the non-fluorinated chain carbonate is preferably 10 to 90% by volume, more preferably 20 to 85% by volume, further preferably 30 to 80% by volume with respect to the solvent.

The carboxylate may be a cyclic carboxylate or a chain carboxylate.

The cyclic carboxylate may be a non-fluorinated cyclic carboxylate or a fluorinated cyclic carboxylate.

An example of the non-fluorinated cyclic carboxylate includes a non-fluorinated saturated cyclic carboxylate. Preferred is a non-fluorinated saturated cyclic carboxylate having an alkylene group having 2 to 4 carbon atoms.

Specific examples of the non-fluorinated saturated cyclic carboxylate having an alkylene group having 2 to 4 carbon atoms include β-propiolactone, γ-butyrolactone, ε-caprolactone, δ-valerolactone, and α-methyl-γ-butyrolactone. Among these, γ-butyrolactone and δ-valerolactone are particularly preferred, in view of improvement of the degree of dissociation of lithium ions and improvement of the load characteristics.

One of the non-fluorinated saturated cyclic carboxylates may be used singly, or two or more thereof may be used in any combination at any ratio.

When the non-fluorinated saturated cyclic carboxylate is contained, the content of the non-fluorinated saturated cyclic carboxylate is preferably 0 to 90% by volume, more preferably 0.001 to 90% by volume, further preferably 1 to 60% by volume, particularly preferably 5 to 40% by volume with respect to the solvent.

The chain carboxylate may be a non-fluorinated chain carboxylate or a fluorinated chain carboxylate. When containing the chain carboxylate, the solvent enables the electrolytic solution to have a further suppressed increase in resistance after high-temperature storage.

The above solvent preferably contains at least one selected from the group consisting of the above cyclic carbonate, the above chain carbonate, and the above chain carboxylate. The above cyclic carbonate is preferably a saturated cyclic carbonate.

An electrolytic solution containing a solvent of the compositional feature enables an electrochemical device to have further improved high-temperature storage characteristics and cycle characteristics.

When the above solvent contains the above cyclic carbonate and at least one selected from the group consisting of the above chain carbonate and the above chain carboxylate, the solvent contains the above cyclic carbonate and at least one selected from the group consisting of the above chain carbonate and the above chain carboxylate in a total amount of preferably 10 to 100% by volume, more preferably 30 to 100% by volume, further preferably 50 to 100% by volume.

When the above solvent contains the above cyclic carbonate and at least one selected from the group consisting of the above chain carbonate and the above chain carboxylate, the volume ratio of the cyclic carbonate to at least one selected from the group consisting of the chain carbonate and the chain carboxylate is preferably 5/95 to 95/5, more preferably 10/90 or more, further preferably 15/85 or more, particularly preferably 20/80 or more, and more preferably 90/10 or less, further preferably 60/40 or less, particularly preferably 50/50 or less.

The above solvent also preferably contains at least one selected from the group consisting of the above non-fluorinated saturated cyclic carbonate, the above non-fluorinated chain carbonate, and the above non-fluorinated chain carboxylate. An electrolytic solution containing a solvent having the above compositional feature can be suitably used for electrochemical devices used at a relatively low voltage.

When the above solvent contains the above non-fluorinated saturated cyclic carbonate and at least one selected from the group consisting of the above non-fluorinated chain carbonate and the above non-fluorinated chain carboxylate, the solvent contains the non-fluorinated saturated cyclic carbonate and at least one selected from the group consisting of the non-fluorinated chain carbonate and the non-fluorinated chain carboxylate in a total amount of preferably 5 to 100% by volume, more preferably 20 to 100% by volume, further preferably 30 to 100% by volume.

When the electrolytic solution contains the above non-fluorinated saturated cyclic carbonate and at least one selected from the group consisting of the above non-fluorinated chain carbonate and the above non-fluorinated chain carboxylate, the volume ratio of the non-fluorinated saturated cyclic carbonate to at least one selected from the group consisting of the non-fluorinated chain carbonate and the non-fluorinated chain carboxylate is preferably 5/95 to 95/5, more preferably 10/90 or more, further preferably 15/85 or more, particularly preferably 20/80 or more, and more preferably 90/10 or less, further preferably 60/40 or less, particularly preferably 50/50 or less.

The above solvent also preferably contains at least one selected from the group consisting of the above fluorinated saturated cyclic carbonate, the above fluorinated chain carbonate, and the above fluorinated chain carboxylate. An electrolytic solution containing a solvent of the compositional feature can be suitably used not only for electrochemical devices used at a relatively low voltage but also for electrochemical devices used at a relatively high voltage.

The solvent is preferably a non-aqueous solvent, and the electrolytic solution of the present disclosure is preferably a non-aqueous electrolytic solution.

The content of the solvent is preferably 70 to 99.999% by mass, more preferably 80% by mass or more, more preferably 92% by mass or less with respect to electrolytic solution.

The electrolytic solution of the present disclosure preferably further contains an electrolyte salt (provided that the compound (5) is excluded). Examples of the electrolyte salt that can be employed include an alkali metal salt, an ammonium salt, a metal salt other than alkali metal salts (such as a light metal salt other than alkali metal salts), any of those that can be used for an electrolytic solution, such as a liquid salt (ionic liquid), an inorganic polymer salt, and an organic polymer salt.

Examples of the electrolyte salt for an electrolytic solution for an electrochemical device include the following compounds: MPF₆, MBF₄, MClO₄, MAsF₆, MB(C₆H₅)₄, MCH₃SO₃, MCF₃SO₃, MAlCl₄, M₂SiF₆, MCl, and MBr, wherein M is at least one metal selected from the group consisting of Li, Na, and K, preferably a metal selected from the group of consisting of Li, Na, and K, more preferably Li or Na. Use of these alkali metal salts enables excellent battery capacity, cycle characteristics, storage characteristics, and the like to be provided. Among these, at least one selected from MPF₆, MBF₄, MClO₄, and MAsF₆ is preferred, and MPF₆ is more preferred. Use of these alkali metal salts leads to further decrease in the internal resistance and enables a higher effect to be provided.

The electrolyte salt for an electrolytic solution for a sodium ion secondary battery is preferably a sodium salt.

Any sodium salt may be used, and specific examples thereof include the following: inorganic sodium salts such as NaPF₆, NaBF₄, NaClO₄, NaAlF₄, NaSbF₆, NaTaF₆, NaWF₇, NaAsF₆, NaAlCl₄, NaI, NaBr, NaCl, NaB₁₀Cl₁₀, Na₂SiF₆, Na₂PFO₃, and NaPO₂F₂;
sodium tungstates such as NaWOF₅;
sodium carboxylates such as HCO₂Na, CH₃CO₂Na, CH₂FCO₂Na, CHF₂CO₂Na, CF₃CO₂Na, CF₃CH₂CO₂Na, CF₃CF₂CO₂Na, CF₃CF₂CF₂CO₂Na, and CF₃CF₂CF₂CF₂CO₂Na;
sodium salts having a S=O group such as FSO₃Na, CH₃SO₃Na, CH₂FSO₃Na, CHF₂SO₃Na, CF₃SO₃Na, CF₃CF₂SO₃Na, CF₃CF₂CF₂SO₃Na, CF₃CF₂CF₂CF₂SO₃Na, sodium methylsulfate, sodium ethylsulfate (C₂H₃OSO₃Na), and sodium 2,2,2-trifluoroethylsulfate;
sodium imide salts such as NaN(FCO)₂, NaN(FCO)(FSO₂), NaN(FSO₂)₂, NaN(FSO₂)(CF₃SO₂), NaN(CF₃SO₂)₂, NaN(C₂F₅SO₂)₂, sodium bisperfluoroethanesulfonyl imide, sodium cyclic 1,2-perfluoroethanedisulfonyl imide, sodium cyclic 1,3-perfluoropropanedisulfonyl imide, sodium cyclic 1,2-ethanedisulfonyl imide, sodium cyclic 1,3-propanedisulfonyl imide, sodium cyclic 1,4-perfluorobutanedisulfonyl imide, NaN(CF₃SO₂)(FSO₂), NaN(CF₃SO₂)(C₃F₇SO₂), NaN(CF₃SO₂)(C₄F₉SO₂), and NaN(POF₂)₂;
sodium methide salts such as NaC(FSO₂)₃, NaC(CF₃SO₂)₃, and NaC(C₂F₅SO₂)₃; and
fluorine-containing organic sodium salts such as salts represented by the formula: NaPFₐ(CₙF₂ₙ₊₁)₆₋ₐ (wherein a is an integer of 0 to 5, and n is an integer of 1 to 6) (such as NaPF₃(C₂F₅)₃, NaPF₃(CF₃)₃, NaPF₃(iso-C₃F₇)₃, NaPF₅(iso-C₃F₇), NaPF₄(CF₃)₂, and NaPF₄(C₂F₅)₂), NaPF₄(CF₃SO₂)₂, NaPF₄(C₂F₅SO₂)₂, NaBF₃CF₃, NaBF₃C₂F₅, NaBF₃C₃F₇, NaBF₂(CF₃)₂, NaBF₂(C₂F₅)₂, NaBF₂(CF₃SO₂)₂, and NaBF₂(C₂F₅SO₂)₂, NaSCN, LiB(CN)₄, NaB(C₆H₅)₄, Na₂(C₂O₄), NaP(C₂O₄)₃, and Na₂B₁₂F_{b}H_{12-b} (wherein b is an integer of 0 to 3) .

In view of having an effect of improving properties such as output characteristics, high-rate charge and discharge characteristics, high-temperature storage characteristics, and cycle characteristics, particularly preferred among these are NaPF₆, NaBF₄, NaSbF₆, NaTaF₆, NaPO₂F₂, FSO₃Na, CF₃SO₃Na, NaN(FSO₂)₂, NaN(FSO₂)(CF₃SO₂), NaN(CF₃SO₂)₂, NaN(C₂F₅SO₂)₂, sodium cyclic 1,2-perfluoroethanedisulfonyl imide, sodium cyclic 1,3-perfluoropropanedisulfonyl imide, NaC(FSO₂)₃, NaC(CF₃SO₂)₃, NaC(C₂F₅SO₂)₃, NaBF₃CF₃, NaBF₃C₂F₅, NaPF₃(CF₃)₃, and NaPF₃(C₂F₅)₃, and most preferred is at least one sodium salt selected from the group consisting of NaPF₆, NaN(FSO₂)₂, and NaBF₄.

The electrolyte salt for an electrolytic solution for a lithium ion secondary battery is preferably a lithium salt.

Any lithium salt may be used, and specific examples thereof include the following: inorganic lithium salts such as LiPF₆, LiBF₄, LiClO₄, LiAlF₄, LiSbF₆, LiTaF₆, LiWF₇, LiAsF₆, LiAlCl₄, Lil, LiBr, LiCl, LiB₁₀Cl₁₀, Li₂SiF₆, Li₂PFO₃, and LiPO₂F₂;
lithium tungstates such as LiWOF₃;
lithium carboxylates such as HCO₂Li, CH₃CO₂Li, CH₂FCO₂Li, CHF₂CO₂Li, CF₃CO₂Li, CF₃CH₂CO₂Li, CF₃CF₂CO₂Li, CF₃CF₂CF₂CO₂Li, and CF₃CF₂CF₂CF₂CO₂Li;
lithium salts having a S=O group such as FSO₃Li, CH₃SO₃Li, CH₂FSO₃Li, CHF₂SO₃Li, CF₃SO₃Li, CF₃CF₂SO₃Li, CF₃CF₂CF₂SO₃Li, CF₃CF₂CF₂CF₂SO₃Li, lithium methylsulfate, lithium ethylsulfate (C₂H₃OSO₃Li), and lithium 2,2,2-trifluoroethylsulfate;
lithium imide salts such as LiN(FCO)₂, LiN(FCO)(FSO₂), LiN(FSO₂)₂, LiN(FSO₂)(CF₃SO₂), LiN(CF₃SO₂)₂, LiN(C₂F₅SO₂)₂, lithium bisperfluoroethanesulfonyl imide, lithium cyclic 1,2-perluoroethanedisulfonyl imide, lithium cyclic 1,3-perfluoropropanedisulfonyl imide, lithium cyclic 1,2-ethanedisulfonyl imide, lithium cyclic 1,3-propanedisulfonyl imide, lithium cyclic 1,4-perfluorobutanedisulfonyl imide, LiN(CF₃SO₂)(FSO₂), LiN(CF₃SO₂)(C₃F₇SO₂), LiN(CF₃SO₂)(C₄F₉SO₂), and LiN(POF₂)₂;
lithium sulfamates such as (CF₃CH₂)₂NSO₃Li, (CF₃CH₂)(CH₃)NSO₃Li, and (CNCH₂)₂NSO₃Li;
lithium methide salts such as LiC(FSO₂)₃, LiC(CF₃SO₂)₃, and LiC(C₂F₅SO₂)₃; and
fluorine-containing organic lithium salts such as salts represented by the formula: LiPFₐ(CₙF₂ₙ₊₁)₆₋ₐ, (wherein a is an integer of 0 to 5, and n is an integer of 1 to 6) (such as LiPF₃(C₂F₅)₃, LiPF₃(CF₃)₃, LiPF₃(iso-C₃F₇)₃, LiPF₅(iso-C₃F₇), LiPF₄(CF₃)₂, LiPF₄(C₂F₅)₂), LiPF₄(CF₃SO₂)₂, LiPF₄(C₂F₅SO₂)₂, LiBF₃CF₃, LiBF₃C₂F₅, LiBF₃C₃F₇, LiBF₂(CF₃)₂, LiBF₂(C₂F₅)₂, LiBF₂(CF₃SO₂)₂, and LiBF₂(C₂F₅SO₂)₂, and LiSCN, LiB(CN)₄, LiB(C₆H₅)₄, Li₂(C₂O₄), LiP(C₂O₄)₃, Li₂B₁₂F_{b}H_{12-b} (wherein b is an integer of 0 to 3) .

In view of having an effect of improving properties such as output characteristics, high-rate charge and discharge characteristics, high-temperature storage characteristics, and cycle characteristics, particularly preferred among these are LiPF₆, LiBF₄, LiSbF₆, LiTaF₆, LiPO₂F₂, FSO₃Li, CF₃SO₃Li, LiN(FSO₂)₂, LiN(FSO₂)(CF₃SO₂), LiN(CF₃SO₂)₂, LiN(C₂F₅SO₂)₂, lithium cyclic 1,2-perfluoroethanedisulfonyl imide, lithium cyclic 1,3-perfluoropropanedisulfonyl imide, LiC(FSO₂)₃, LiC(CF₃SO₂)₃, LiC(C₂F₅SO₂)₃, LiBF₃CF₃, LiBF₃C₂F₅, LiPF₃(CF₃)₃, and LiPF₃(C₂F₅)₃, and most preferred is at least one lithium salt selected from the group consisting of LiPF₆, LiN(FSO₂)₂, and LiBF₄.

These electrolyte salts may be used singly or in combinations of two or more thereof. Preferred examples for combination use of two or more thereof include a combination of LiPF₆ and LiBF₄ and a combination of LiPF₆ and LiPO₂F₂, C₂H₅OSO₃Li, or FSO₃Li. These combinations have an effect of improving the high-temperature storage characteristics, load characteristics, and cycle characteristics.

In this case, the amount of LiBF₄, LiPO₂F₂, C₂H₃OSO₃Li, or FSO₃Li to be blended based on 100% by mass of the total electrolytic solution is not limited and optional as long as the effects of the present disclosure are not significantly impaired. The amount thereof is usually 0.01% by mass or more, preferably 0.1% by mass or more, while usually 30% by mass or less, preferably 20% by mass or less, more preferably 10% by mass or less, further preferably 5% by mass or less, with respect to the electrolytic solution of the present disclosure.

In another example, an inorganic lithium salt and an organic lithium salt are used in combination. Such a combination has an effect of suppressing deterioration due to high-temperature storage. The organic lithium salt is preferably CF₃SO₃Li, LiN(FSO₂)₂, LiN(FSO₂)(CF₃SO₂), LiN(CF₃SO₂)₂, LiN(C₂F₅SO₂)₂, lithium cyclic 1,2-perfluoroethanedisulfonyl imide, lithium cyclic 1,3-perfluoropropanedisulfonyl imide, LiC(FSO₂)₃, LiC(CF₃SO₂)₃, LiC(C₂F₅SO₂)₃, LiBF₃CF₃, LiBF₃C₂F₅, LiPF₃(CF₃)₃, LiPF₃(C₂F₅)₃, or the like. In this case, the proportion of the organic lithium salt is preferably 0.1% by mass or more, particularly preferably 0.5% by mass or more, while preferably 30% by mass or less, particularly preferably 20% by mass or less, based on 100% by mass of the total electrolytic solution.

The concentration of the electrolyte salt in the electrolytic solution is not limited as long as the effects of the present disclosure is not impaired. In view of making the electric conductivity of the electrolytic solution within a favorable range and ensuring favorable battery performance, the lithium in the electrolytic solution preferably has a total mole concentration of 0.3 mol/L or more, more preferably 0.4 mol/L or more, further preferably 0.5 mol/L or more, while preferably 3 mol/L or less, more preferably 2.5 mol/L or less, further preferably 2.0 mol/L or less.

If the total mole concentration of lithium is excessively low, the electric conductivity of the electrolytic solution may be insufficient. On the other hand, if the total mole concentration thereof is excessively high, the electric conductivity may decrease due to increase in the viscosity, and the battery performance may deteriorate.

The electrolytic solution of the present disclosure may further contain additives, such as a fluorinated saturated cyclic carbonate, an unsaturated cyclic carbonate, an overcharge inhibitor, and other known aids. This can suppress deterioration of the characteristics of an electrochemical device.

The electrolytic solution of the present disclosure may further contain additives such as an ether compound that does not correspond to the fluorinated ether represented by the above general formula (2), a cyclic carboxylate, a chain carboxylate, a nitrogen-containing compound, a boron-containing compound, an organosilicon-containing compound, a fireproof agent (flame retardant), a surfactant, an additive for increasing the permittivity, an improver for cycle characteristics and rate characteristics, and a sulfone-based compound to the extent that the effects of the present disclosure are not impaired.

The ether compound is preferably a chain ether having 2 to 10 carbon atoms and a cyclic ether having 3 to 6 carbon atoms.

Examples of the chain ether having 2 to 10 carbon atoms include dimethyl ether, diethyl ether, di-n-butyl ether, dimethoxymethane, methoxyethoxymethane, diethoxymethane, dimethoxyethane, methoxyethoxyethane, diethoxyethane, ethylene glycol di-n-propyl ether, ethylene glycol di-n-butyl ether, diethylene glycol, diethylene glycol dimethyl ether, pentaethylene glycol, triethylene glycol dimethyl ether, triethylene glycol, tetraethylene glycol, tetraethylene glycol dimethyl ether, and diisopropyl ether.

Examples of the cyclic ether having 3 to 6 carbon atoms include 1,2-dioxane, 1,3-dioxane, 2-methyl-1,3-dioxane, 4-methyl-1,3-dioxane, 1,4-dioxane, metaformaldehyde, 2-methyl-1,3-dioxolane, 1,3-dioxolane, 4-methyl-1,3-dioxolane, 2-(trifluoroethyl)dioxolane, 2,2,-bis(trifluoromethyl)-1,3-dioxolane, and fluorinated compounds thereof. Preferred among these are dimethoxymethane, diethoxymethane, ethoxymethoxymethane, ethylene glycol n-propyl ether, ethylene glycol di-n-butyl ether, diethylene glycol dimethyl ether, and crown ethers, in view of high ability to solvate with lithium ions and improvement in the degree of ion dissociation, particularly preferred are dimethoxymethane, diethoxymethane, and ethoxymethoxymethane because of giving a low viscosity and a high ion conductivity.

The electrolytic solution of the present disclosure preferably contains 5 to 200 ppm of hydrogen fluoride (HF). Incorporation of HF can promote formation of a film of the additive mentioned above. If the content of HF is excessively small, the ability to form a film on the negative electrode tends to decrease, and the characteristics of an electrochemical device tend to deteriorate. If the content of HF is excessively large, the oxidation resistance of the electrolytic solution tends to decrease due to the influence of HF. The electrolytic solution of the present disclosure, even when containing HF in the content within the above range, causes no reduction in the recovery capacity ratio after high-temperature storage of an electrochemical device.

The content of HF is more preferably 10 ppm or more, further preferably 20 ppm or more. The content of HF is more preferably 100 ppm or less, further preferably 80 ppm or less, particularly preferably 50 ppm or less.

The content of HF can be measured by neutralization titration.

The electrolytic solution of the present disclosure is preferably prepared by any method using the components mentioned above.

The electrolytic solution of the present disclosure can be preferably applied to electrochemical devices such as a sodium ion secondary battery, a lithium ion secondary battery, a lithium ion capacitor, a hybrid capacitor, and an electric double layer capacitor. An electrochemical device including the electrolytic solution of the present disclosure is also one of aspects of the present disclosure.

### (Electrochemical Device)

The above electrochemical device is not limited, and can be applied to an electrochemical device conventionally known. Specific examples thereof include secondary batteries such as a sodium ion battery and a lithium ion battery, primary batteries such as a lithium battery, a magnesium ion battery, a radical battery, a solar cell (particularly a dye-sensitized solar cell), a fuel cell;
capacitors such as a lithium ion capacitor, a hybrid capacitor, an electrochemical capacitor, and an electric double layer capacitor;
various capacitors such as an aluminum electrolytic capacitor and a tantalum electrolytic capacitor;
an electromic device, an electrochemical switching device, and various electrochemical sensors.

Among these, because of high capacity and large output, the electrochemical device can also be preferably used as a secondary battery that causes a large volume change due to transfer of a large amount of metal ions.

The secondary battery can have a known structure, and typically includes a positive electrode and a negative electrode, which can occlude and release ions (such as lithium ions and sodium ions), and the electrolytic solution of the present disclosure. A secondary battery including the electrolytic solution of the present disclosure is also one of aspects of the present disclosure.

Hereinafter, the secondary battery including the electrolytic solution of the present disclosure will be described.

The present disclosure also relates to a lithium ion secondary battery or a sodium ion secondary battery each including the electrolytic solution of the present disclosure. The secondary battery preferably includes a positive electrode, a negative electrode, and the electrolytic solution mentioned above. A sodium ion secondary battery including the electrolytic solution of the present disclosure is also one of aspects of the present disclosure.

### <Positive Electrode>

The positive electrode is preferably composed of a positive electrode active material layer containing a positive electrode active material, and a current collector.

The positive electrode active material is not limited as long as the material can electrochemically occlude and release alkali metal ions. A preferred example thereof includes a material containing an alkali metal and at least one transition metal. Specific examples thereof include alkali metal-containing transition metal composite oxides and alkali metal-containing transition metal phosphate compounds. Particularly preferred among these as the positive electrode active material is an alkali metal-containing transition metal composite oxide that generates a high voltage. Examples of the alkali metal ion include a lithium ion, a sodium ion, and a potassium ion. In a preferred embodiment, the alkali metal ion may be a lithium ion or a sodium ion. In other words, in the present embodiment, the alkali metal ion secondary battery is a lithium ion secondary battery or a sodium ion secondary battery.

Examples of the alkali metal-containing transition metal composite oxide include
lithium-manganese spinel composite oxides represented by the formula (3-1): MaMn_{2-b}M¹_{b}O₄
   wherein M is at least one metal selected from the group consisting of Li, Na, and K; 0.9 ≤ a; 0 ≤ b ≤ 1.5; M¹ is at least one metal selected from the group consisting of Fe, Co, Ni, Cu, Zn, Al, Sn, Cr, V, Ti, Mg, Ca, Sr, B, Ga, In, Si, and Ge;
lithium-nickel composite oxides represented by the formula (3-2): MNi_{1-c}M²_{c}O₂
   wherein M is at least one metal selected from the group consisting of Li, Na, and K; 0 ≤ c ≤ 0.5; M² is at least one metal selected from the group consisting of Fe, Co, Mn, Cu, Zn, Al, Sn, Cr, V, Ti, Mg, Ca, Sr, B, Ga, In, Si, and Ge; or
lithium-cobalt composite oxides represented by the formula (3-3) : MCo_{1-d}M³_{d}O₂
wherein M is at least one metal selected from the group consisting of, Li, Na, and K; 0 ≤ d ≤ 0.5; M³ is at least one metal selected from the group consisting of Fe, Ni, Mn, Cu, Zn, Al, Sn, Cr, V, Ti, Mg, Ca, Sr, B, Ga, In, Si, and Ge. In the above, M is preferably one metal selected from the group consisting of Li, Na, and K, more preferably Li or Na.

In view of enabling a high-output secondary battery having a high energy density to be provided, preferred among these is MCoO₂, MMnO₂, MNiO₂, MMn₃O₄, MNi_{0.8}Co_{0.15}Al_{0.05}O₂, MNi_{1/3}Co_{1/3}Mn_{1/3}O₂, or the like, and a compound represented by the following formula (3-4) is preferred:

MNiₕCoᵢMnⱼM⁵ₖO₂ (3-4)

wherein M is at least one metal selected from the group consisting of Li, Na, and K, M⁵ represents at least one selected from the group consisting of Fe, Cu, Zn, Al, Sn, Cr, V, Ti, Mg, Ca, Sr, B, Ga, In, Si, and Ge, (h + i + j + k) = 1.0, 0 ≤ h ≤ 1.0, 0 ≤ i ≤ 1.0, 0 ≤ j ≤ 1.5, 0 ≤ k < 0.2.

Examples of the material of the current collector for a positive electrode include metal materials including metals such as aluminum, titanium, tantalum, stainless steel, and nickel, and alloys thereof; and carbon materials such as carbon cloth and carbon paper. Preferred among these are metal materials, especially aluminum or an alloy thereof.

The positive electrode may be produced by a usual method. An example of the production method includes a method in which the positive electrode active material is mixed with a binder, a thickening agent, a conductive material, a solvent, and the like to form a slurry-like positive electrode mixture, and then this mixture is applied to a current collector, dried, and pressed so as to enhance the density.

The density can be enhanced with a manual press, a roll press, or the like. The density of the positive electrode active material layer is in the range of preferably 1.5 g/cm³ or more, more preferably 2 g/cm³ or more, further preferably 2.2 g/cm³ or more, while preferably 5 g/cm³ or less, more preferably 4.5 g/cm³ or less, further preferably 4 g/cm³ or less. If the density exceeds this range, the permeability of the electrolytic solution toward the vicinity of the interface between the current collector and the active material decreases, charge and discharge characteristics deteriorate particularly at a high current density, and thus, high output may not be provided. If the density falls below the range, the electrical conductivity between the active materials may decrease, the battery resistance may increase, and thus, high output may not be provided.

### <Negative Electrode>

The negative electrode is preferably composed of a negative electrode active material layer, and a current collector.

### (Negative Electrode Active Material)

The negative electrode active material is not limited, and examples thereof include any material selected from lithium metal, those containing carbonaceous materials such as artificial graphite, graphite carbon fiber, hard carbon, resin calcined carbon, pyrolytic vapor-grown carbon, coke, meso-carbon microbead (MCMB), furfuryl alcohol resin calcined carbon, polyacene, pitch-based carbon fiber, vapor-grown carbon fiber, natural graphite, and non-graphitizable carbon, silicon-containing compounds such as silicon and silicon alloy, Li₄Ti₅O₁₂ and the like, or a mixture of two or more thereof. Among these, those partially containing a carbonaceous material, and silicon-containing compounds can be particularly preferably used.

Examples of the current collector provided in the negative electrode of the present disclosure include metal foils or metal meshes of iron, stainless steel, copper, aluminum, nickel, titanium and the like, and carbon materials such as carbon cloth and carbon paper, and preferred among these is copper foil.

The negative electrode can be preferably produced by a production method in which the negative electrode mixture mentioned above is applied to the current collector. After the negative electrode mixture is applied, the coating film may be further dried, and optionally heat-treated, and the resulting dried coating film may be pressed.

In the case of a metal material, the current collector may be in the form of metal foil, metal cylinder, metal coil, metal plate, expanded metal, punched metal, metal foam, or the like, and in the case of a carbon material, the current collector may be in the form of carbon plate, carbon thin film, carbon cylinder, or the like. Preferred among these is metal foil. The thin film may be in the form of mesh, as appropriate. The thin film may have any thickness, and the thickness is usually 1 µm or more, preferably 3 µm or more, more preferably 5 µm or more, while usually 1 mm or less, preferably 100 µm or less, more preferably 50 µm or less. If the thin film is thinner than the above range, the strength thereof may become insufficient required for a current collector. In contrast, if the thin film is thicker than this range, the handleability may be impaired.

### <Separator>

The secondary battery of the present disclosure preferably further comprises a separator.

The material and shape of the separator is not limited and known one may be used as long as the separator is stable to the electrolytic solution and excellent in a liquid-retaining ability. In particular, it is preferred to use a separator in the form of a porous sheet or a nonwoven fabric for which a resin, a glass fiber, inorganic matter, or the like formed of a material stable to the electrolytic solution of the present disclosure is employed and which has excellent liquid-retaining ability.

Examples of the material of a resin or glass-fiber separator that can be used include polyolefins such as polyethylene and polypropylene, aromatic polyamide, polytetrafluoroethylene, polyether sulfone, and glass filters. One of these materials may be used singly or two or more of these may be used in any combination at any ratio, for example, in the form of a polypropylene/polyethylene bilayer film or a polypropylene/polyethylene/polypropylene trilayer film. Among these, the above separator is preferably a porous sheet or a nonwoven fabric formed from a polyolefin such as polyethylene or polypropylene as the raw material, in view of favorable permeability of the electrolytic solution and a favorable shut-down effect.

The separator may have any thickness, and the thickness is usually 1 µm or more, preferably 5 µm or more, further preferably 8 µm or more, while usually 50 µm or less, preferably 40 µm or less, further preferably 30 µm or less. If the separator is excessively thinner than the above range, the insulation and mechanical strength may decrease. If the separator is excessively thicker than the above range, not only the battery performance such as rate characteristics may deteriorate but also an energy density of the whole electrolytic solution battery may decrease.

### <Battery Design>

The electrode group may have either a laminate structure including the above positive electrode plate and negative electrode plate with the above separator interposed therebetween, or a wound structure including the above positive electrode plate and negative electrode plate wound in a spiral form with the above separator interposed therebetween. The proportion of the volume of the electrode group in the battery internal volume (hereinafter, referred to as an electrode group occupancy) is usually 40% or more, preferably 50% or more, while usually 90% or less, preferably 80% or less.

The material of the external case is not limited as long as the material is stable to an electrolytic solution to be used. Specific examples thereof include metals such as nickel-plated steel plates, stainless steel, aluminum and aluminum alloys, and magnesium alloys, or a layered film (laminate film) of a resin and aluminum foil. From the viewpoint of weight reduction, a metal such as aluminum or an aluminum alloy or a laminate film is suitably used.

The secondary battery of the present disclosure may have any shape, and examples thereof include a cylindrical shape, a square shape, a laminate shape, a coin shape, and a large-size shape. The shapes and the constitutions of the positive electrode, the negative electrode, and the separator may be changed for use in accordance with the shape of each of the battery.

### Examples

Next, the present disclosure will be described with reference to Examples, but the present disclosure is not intended to be limited to these Examples.

Unless otherwise specified in the following Examples, "parts" and "%" represent "parts by mass" and "% by mass", respectively.

Compounds (1-1) to (1-10) used are shown below.

(1-1) CF₂HCF₂CH₂ONa

(1-2) CF₂HCF₂CH₂OK

(1-3) CF₂HCF₂CF₂CF₂CH₂ONa

(1-4) CF₂HCF₂CF₂CF₂CH₂OK

(1-5) CF₂HCF₂ONa

(1-6) CF₂HCF₂OK

(1-7) CF₃CHFCF₂ONa

(1-8) CF₃CHFCF₂OK

(1-9) CF₃CF₂CH₂ONa

(1-10) CF₃CF₂CH₂OK

Compounds (2-1) to (2-3) used are shown below.

(2-1) CF₂HCF₂CH₂OCF₂CF₂H

(2-2) CF₂HCF₂CH₂OCF₂CHFCF₃

(2-3) CF₃CF₂CH₂OCF₂CF₂H

### (Example 1)

### [Preparation of Electrolytic Solution]

Ethylene carbonate (EC), diethyl carbonate (DEC) and fluoroethylene carbonate (FEC) were mixed in a volume ratio of 30/68/2, and to this mixture was added NaPF₆ at a concentration of 1.0 mol/L to thereby prepare a basic electrolytic solution.

To the basic electrolytic solution, 0.1 ppm of the compound (1-1) was added, and they were mixed to thereby prepare a non-aqueous electrolytic solution.

### [Production of Positive Electrode]

To 97 parts by mass of NaCoO₂ as a positive electrode active material, 1.5 parts by mass of acetylene black as a conductive aid and 1.5 parts by mass of polyvinylidene fluoride (8 mass% NMP solution) as a binder were added, and they were mixed using a disperser to form a slurry. The resulting slurry was applied to 20-µm-thick aluminum foil, dried, then rolled using a press, and cut to provide a piece having a coated area having a width of 50 mm and a length of 30 mm (positive electrode material layer) and an uncoated area having a width of 5 mm and a length of 9 mm, as a positive electrode.

### [Production of Negative Electrode]

94% by mass of hard carbon as a negative electrode active material and 6% by mass of polyvinylidene fluoride (PVdF) as a binder were mixed, thereto was further added N-methyl-2-pyrrolidone (NMP), and they were mixed to form a slurry. The resulting slurry was applied to a negative electrode current collector composed of 15-µm-thick copper foil, and dried. This was cut to provide a piece with a predetermined electrode size, and the piece was rolled using a roll press to thereby produce a negative electrode having a negative electrode material layer formed on the negative electrode current collector.

### [Production of Battery]

The produced negative electrode having a negative electrode material layer on one surface was cut to provide a piece having a coated area having a width of 52 mm and a length of 32 mm (negative electrode material layer) and an uncoated area having a width of 5 mm and a length of 9 mm, as a negative electrode.

The positive electrode was faced to the negative electrode with a microporous polyethylene film (separator) having a thickness of 20 µm interposed therebetween, then the non-aqueous electrolytic solution provided above was injected therein, the non-aqueous electrolytic solution was made to sufficiently permeate into the separator and the like, thereafter, sealing, preliminary charging, and aging were performed to produce an aluminum laminated cell (sodium ion secondary battery).

### (Measurement of Battery Characteristics)

### [Cycle Characteristics]

The resulting aluminum laminated cell was subjected to constant-current constant-voltage charging (hereinafter referred to as CC/CV charging) (0.1 C cut) to 3.8 V at a current corresponding to 0.2 C and then discharged to 1.5 V at a constant current of 0.2 C, at 25°C, and taking this as 1 cycle, 3 cycles were performed. Thereafter, the cell was subjected to CC/CV charging (0.1 C cut) to 3.8 V at a current corresponding to 1.0 C and then discharged to 1.5 V at a constant current of 1.0 C, at 45°C, and taking this as 1 cycle, an initial discharge capacity was determined from a discharge capacity. The cycles were performed again, and a discharge capacity after 300 cycles was measured. A ratio of the discharge capacity after 300 cycles to the initial discharge capacity was determined as capacity retention (%). Capacity retention (%) = (discharge capacity after 300 cycles)÷(1.0 C initial discharge capacity)×100

The results are shown as relative values when taking the result of Comparative Example 1, 2, 3, or 4 as 1.

### [Amount of Gas Generated]

Before and after performing the cycles, a volume of the battery was measured by Archimedes method, and the amount of gas generated was determined by the following formula. (volume after 300 cycles)-(initial volume) = amount of gas generated (mL)

Relative values when taking the value of Comparative Example 1, 2, 3, or 4 as 1 were calculated.

### (Measurement of Amount of Metal Precipitated)

### [Amount of Co]

After 300 cycles, the aluminum laminated cell was disassembled, and the negative electrode was taken out and immersed in a 5 wt% nitric acid aqueous solution for 24 hours. After 24 hours, filtration was performed, and the filtrate was subjected to the ICP emission spectroscopy to thereby calculate the amount of Co (ppm).

### (Examples 2 to 35)

A non-aqueous electrolytic solution was prepared in the same manner as in Example 1 except that the types of the additives for the electrolytic solution and the amounts thereof added were changed as shown in Table 1, and further, a battery was produced and evaluated.

The results are shown in Table 1.

### (Comparative Example 1)

A non-aqueous electrolytic solution was prepared in the same manner as in Example 1 except that the additives were not used, and further, a battery was produced and evaluated.

The results are shown in Table 1.

**[Table 1]**

| | Additive (1) | Concentration (ppm) | Additive (2) | Concentration (mass%) | Battery characteristics | | Amount of metal precipitated |
|---|---|---|---|---|---|---|---|
| | | | | | Cycle characteristics (relative value when taking value of Comparative Example 1 as 1) | Amount of gas (relative value when taking value of Comparative Example 1 as 1) | Amount of Co, ppm |
| Example 1 | 1-1 | 0.1 | - | - | 1.45 | 0.70 | 80 |
| Example 2 | 1-1 | 1 | - | - | 1.46 | 0.69 | 81 |
| Example 3 | 1-1 | 10 | - | - | 1.47 | 0.68 | 80 |
| Example 4 | 1-1 | 100 | - | - | 1.52 | 0.62 | 81 |
| Example 5 | 1-1 | 1000 | - | - | 1.50 | 0.63 | 79 |
| Example 6 | 1-1 | 10000 | - | - | 1.51 | 0.65 | 80 |
| Example 7 | 1-2 | 100 | - | - | 1.47 | 0.68 | 80 |
| Example 8 | 1-3 | 100 | - | - | 1.48 | 0.68 | 80 |
| Example 9 | 1-4 | 100 | - | - | 1.46 | 0.71 | 80 |
| Example 10 | 1-1 | 0.1 | 2-1 | 3.00 | 1.48 | 0.68 | 65 |
| Example 11 | 1-1 | 1 | 2-1 | 3.00 | 1.49 | 0.67 | 64 |
| Example 12 | 1-1 | 10 | 2-1 | 3.00 | 1.50 | 0.66 | 65 |
| Example 13 | 1-1 | 100 | 2-1 | 3.00 | 1.55 | 0.60 | 64 |
| Example 14 | 1-1 | 1000 | 2-1 | 3.00 | 1.53 | 0.61 | 65 |
| Example 15 | 1-1 | 10000 | 2-1 | 3.00 | 1.54 | 0.63 | 64 |
| Example 16 | 1-1 | 100 | 2-1 | 0.1 | 1.53 | 0.65 | 70 |
| Example 17 | 1-1 | 100 | 2-1 | 1.0 | 1.52 | 0.67 | 67 |
| Example 18 | 1-1 | 100 | 2-1 | 10 | 1.51 | 0.68 | 60 |
| Example 19 | 1-1 | 100 | 2-1 | 20 | 1.48 | 0.69 | 50 |
| Example 20 | 1-1 | 100 | 2-1 | 40 | 1.47 | 0.70 | 45 |
| Example 21 | 1-2 | 100 | 2-1 | 3.0 | 1.49 | 0.65 | 65 |
| Example 22 | 1-3 | 100 | 2-1 | 3.0 | 1.50 | 0.65 | 65 |
| Example 23 | 1-4 | 100 | 2-1 | 3.0 | 1.48 | 0.68 | 64 |
| Example 24 | 1-5 | 100 | - | - | 1.51 | 0.63 | 80 |
| Example 25 | 1-5 | 100 | 2-1 | 3.0 | 1.54 | 0.61 | 65 |
| Example 26 | 1-6 | 100 | - | - | 1.46 | 0.69 | 80 |
| Example 27 | 1-6 | 100 | 2-1 | 3.0 | 1.49 | 0.67 | 64 |
| Example 28 | 1-7 | 100 | - | - | 1.48 | 0.66 | 82 |
| Example 29 | 1-7 | 100 | 2-2 | 3.0 | 1.51 | 0.64 | 66 |
| Example 30 | 1-8 | 100 | - | - | 1.43 | 0.72 | 83 |
| Example 31 | 1-8 | 100 | 2-2 | 3.0 | 1.46 | 0.70 | 66 |
| Example 32 | 1-9 | 100 | - | - | 1.47 | 0.67 | 83 |
| Example 33 | 1-9 | 100 | 2-3 | 3.0 | 1.50 | 0.65 | 66 |
| Example 34 | 1-10 | 100 | - | - | 1.42 | 0.73 | 82 |
| Example 35 | 1-10 | 100 | 2-3 | 3.0 | 1.45 | 0.71 | 66 |
| Comparative Example 1 | - | - | - | - | 1.00 | 1.00 | 120 |

### (Examples 36 to 39)

1,2-Dimethoxyethane (DME) and 1,3-dioxolane (DOL) were mixed in a volume ratio of 1/1, and to this mixture was added sodium bis(trifluoromethanesulfonyl)imide (NaTFSI) at a concentration of 1.0 mol/L to thereby prepare a basic electrolytic solution.

A non-aqueous electrolytic solution was prepared in the same manner as in Example 1 except that the types of the additives for the electrolytic solution and the amounts thereof added were changed as shown in Table 2, and further, a battery was produced and evaluated.

The results are shown in Table 2.

### (Comparative Example 2)

A non-aqueous electrolytic solution was prepared in the same manner as in Example 36 except that the additives were not used, and further, a battery was produced and evaluated.

The results are shown in Table 2.

**[Table 2]**

| | Additive (1) | Concentration (ppm) | Additive (2) | Concentration (mass%) | Battery characteristics | | Amount of metal precipitated |
|---|---|---|---|---|---|---|---|
| | | | | | Cycle characteristics (relative value when taking value of Comparative Example 2 as 1) | Amount of gas (relative value when taking value of Comparative Example 2 as 1) | Amount of Co, ppm |
| Example 36 | 1-1 | 100 | - | - | 1.60 | 0.62 | 90 |
| Example 37 | 1-1 | 100 | 2-1 | 3.00 | 1.65 | 0.57 | 75 |
| Example 38 | 1-5 | 100 | - | - | 1.58 | 0.64 | 90 |
| Example 39 | 1-5 | 100 | 2-1 | 3.00 | 1.63 | 0.60 | 74 |
| Comparative Example 2 | - | - | - | - | 1.00 | 1.00 | 140 |

### (Examples 40 to 43)

To propylene carbonate (PC) was added NaPF₆ at a concentration of 1.0 mol/ L to thereby prepare a basic electrolytic solution.

A non-aqueous electrolytic solution was prepared in the same manner as in Example 1 except that the types of the additives for the electrolytic solution and the amounts thereof added were changed as shown in Table 3, and further, a battery was produced and evaluated.

The results are shown in Table 3.

### (Comparative Example 3)

A non-aqueous electrolytic solution was prepared in the same manner as in Example 40 except that the additives were not used, and further, a battery was produced and evaluated.

The results are shown in Table 3.

**[Table 3]**

| | Additive (1) | Concentration (ppm) | Additive (2) | Concentration (mass%) | Battery characteristics | | Amount of metal precipitated |
|---|---|---|---|---|---|---|---|
| | | | | | Cycle characteristics (relative value when taking value of Comparative Example 3 as 1) | Amount of gas (relative value when taking value of Comparative Example 3 as 1) | Amount of Co, ppm |
| Example 40 | 1-1 | 100 | - | - | 1.58 | 0.63 | 70 |
| Example 41 | 1-1 | 100 | 2-1 | 3.00 | 1.63 | 0.58 | 55 |
| Example 42 | 1-5 | 100 | - | - | 1.56 | 0.65 | 71 |
| Example 43 | 1-5 | 100 | 2-1 | 3.00 | 1.61 | 0.61 | 55 |
| Comparative Example 3 | - | - | - | - | 1.00 | 1.00 | 110 |

### (Examples 44 to 47)

Ethylene carbonate (EC) and dimethyl carbonate (DMC) were mixed in a volume ratio of 2/98, and to this mixture was added sodium bis(trifluoromethanesulfonyl)imide (NaFSI) at a concentration of 1.0 mol/L to thereby prepare a basic electrolytic solution.

A non-aqueous electrolytic solution was prepared in the same manner as in Example 1 except that the types of the additives for the electrolytic solution and the amounts thereof added were changed as shown in Table 4, and further, a battery was produced and evaluated.

The results are shown in Table 4.

### (Comparative Example 4)

A non-aqueous electrolytic solution was prepared in the same manner as in Example 44 except that the additives were not used, and further, a battery was produced and evaluated.

The results are shown in Table 4.

**[Table 4]**

| | Additive (1) | Concentration (ppm) | Additive (2) | Concentration (mass%) | Battery characteristics | | Amount of metal precipitated |
|---|---|---|---|---|---|---|---|
| | | | | | Cycle characteristics (relative value when taking value of Comparative Example 4 as 1) | Amount of gas (relative value when taking value of Comparative Example 4 as 1) | Amount of Co, ppm |
| Example 44 | 1-1 | 100 | - | - | 1.58 | 0.63 | 80 |
| Example 45 | 1-1 | 100 | 2-1 | 20 | 1.55 | 0.65 | 60 |
| Example 46 | 1-1 | 100 | 2-1 | 40 | 1.52 | 0.67 | 50 |
| Example 47 | 1-1 | 100 | 2-1 | 75 | 1.38 | 0.75 | 30 |
| Comparative Example 4 | - | - | - | - | 1.00 | 1.00 | 110 |

### (Example 48)

### [Preparation of Electrolytic Solution]

Ethylene carbonate (EC) and ethyl methyl carbonate (EMC) were mixed in a volume ratio of 3/7, and to this mixture was added LiPF₆ at a concentration of 1.0 mol/L to thereby prepare a basic electrolytic solution.

To the basic electrolytic solution, 0.1 ppm of the compound (1-1) was added, and they were mixed to thereby prepare a non-aqueous electrolytic solution.

### [Production of Positive Electrode]

To 97 parts by mass of LiNi_{0.8}Mn_{0.1}Co_{0.1}O₂ (NMC811) as a positive electrode active material, 1.5 parts by mass of acetylene black as a conductive aid and 1.5 parts by mass of polyvinylidene fluoride (8 mass% NMP solution) as a binder were added, and they were mixed using a disperser to form a slurry. The resulting slurry was applied to 20-µm-thick aluminum foil, dried, then rolled using a press, and cut to provide a piece having a coated area having a width of 50 mm and a length of 30 mm (positive electrode material layer) and an uncoated area having a width of 5 mm and a length of 9 mm, as a positive electrode.

### [Production of Negative Electrode]

94% by mass of a silicon oxide powder (SiO) and graphite (ratio by mass 10/90) as negative electrode active materials and 6% by mass of polyvinylidene fluoride (PVdF) as a binder were mixed, thereto was further added N-methyl-2-pyrrolidone (NMP), and they were mixed to form a slurry. The resulting slurry was applied to a negative electrode current collector composed of 15-µm-thick copper foil, and dried. This was cut to provide a piece with a predetermined electrode size, and the piece was rolled using a roll press to thereby produce a negative electrode having a negative electrode material layer formed on the negative electrode current collector.

### [Production of Battery]

The produced negative electrode having a negative electrode material layer on one surface was cut to provide a piece having a coated area having a width of 52 mm and a length of 32 mm (negative electrode material layer) and an uncoated area having a width of 5 mm and a length of 9 mm, as a negative electrode.

The positive electrode was faced to the negative electrode with a microporous polyethylene film (separator) having a thickness of 20 µm interposed therebetween, then the non-aqueous electrolytic solution provided above was injected therein, the non-aqueous electrolytic solution was made to sufficiently permeate into the separator and the like, thereafter, sealing, preliminary charging, and aging were performed to produce an aluminum laminated cell (lithium ion secondary battery).

The resulting battery was evaluated on the battery characteristics mentioned above and the amount of metal precipitated mentioned below.

The results are shown in Table 5.

### [Cycle Characteristics]

The resulting aluminum laminated cell was subjected to constant-current constant-voltage charging (hereinafter referred to as CC/CV charging) (0.1 C cut) to 4.2 V at a current corresponding to 0.2 C and then discharged to 2.5 V at a constant current of 0.2 C, at 25°C, and taking this as 1 cycle, 3 cycles were performed. Thereafter, the cell was subjected to CC/CV charging (0.1 C cut) to 4.2 V at a current corresponding to 1.0 C and then discharged to 2.5 V at a constant current of 1.0 C, at 45°C, and taking this as 1 cycle, an initial discharge capacity was determined from a discharge capacity. The cycles were performed again, and a discharge capacity after 500 cycles was measured. A ratio of the discharge capacity after 500 cycles to the initial discharge capacity was determined as capacity retention (%). Capacity retention (%) = (discharge capacity after 500 cycles) ÷ (1.0 C initial discharge capacity) × 100

The results are shown as relative values when taking the result of Comparative Example 5 or Comparative Example 6 as 1.

### [Amount of Gas Generated]

Before and after performing the cycles, a volume of the battery was measured by Archimedes method, and the amount of gas generated was determined by the following formula. (volume after 500 cycles) - (initial volume) = amount of gas generated (mL)

Relative values when taking the value of Comparative Example 5 or Comparative Example 6 as 1 were calculated.

### (Measurement of Amount of Metal Precipitated)

### [Amount of Mn]

After 500 cycles, the aluminum laminated cell was disassembled, and the negative electrode was taken out and immersed in a 5 wt% nitric acid aqueous solution for 24 hours. After 24 hours, filtration was performed, and the filtrate was subjected to the ICP emission spectroscopy to thereby calculate the amount of Mn (ppm).

### (Examples 49 to 82)

A non-aqueous electrolytic solution was prepared in the same manner as in Example 48 except that the types of the additives for the electrolytic solution and the amounts thereof added were changed as shown in Table 5, and further, a battery was produced and evaluated.

The results are shown in Table 5.

### (Comparative Example 5)

A non-aqueous electrolytic solution was prepared in the same manner as in Example 48 except that the additives were not used, and further, a battery was produced and evaluated.

The results are shown in Table 5.

**[Table 5]**

| | Additive (1) | Concentration (ppm) | Additive (2) | Concentration (mass%) | Battery characteristics | | Amount of metal precipitated |
|---|---|---|---|---|---|---|---|
| | | | | | Cycle characteristics (relative value when taking value of Comparative Example 5 as 1) | Amount of gas (relative value when taking value of Comparative Example 5 as 1) | Amount of Mn, ppm |
| Example 48 | 1-1 | 0.1 | - | - | 1.48 | 0.66 | 802 |
| Example 49 | 1-1 | 1 | - | - | 1.49 | 0.65 | 805 |
| Example 50 | 1-1 | 10 | - | - | 1.5 | 0.64 | 802 |
| Example 51 | 1-1 | 100 | - | - | 1.55 | 0.58 | 803 |
| Example 52 | 1-1 | 1000 | - | - | 1.53 | 0.59 | 804 |
| Example 53 | 1-1 | 10000 | - | - | 1.54 | 0.61 | 803 |
| Example 54 | 1-2 | 100 | - | - | 1.50 | 0.64 | 803 |
| Example 55 | 1-3 | 100 | - | - | 1.51 | 0.64 | 802 |
| Example 56 | 1-4 | 100 | - | - | 1.49 | 0.67 | 804 |
| Example 57 | 1-1 | 0.1 | 2-1 | 3.00 | 1.51 | 0.64 | 630 |
| Example 58 | 1-1 | 1 | 2-1 | 3.00 | 1.52 | 0.63 | 632 |
| Example 59 | 1-1 | 10 | 2-1 | 3.00 | 1.53 | 0.62 | 629 |
| Example 60 | 1-1 | 100 | 2-1 | 3.00 | 1.58 | 0.56 | 630 |
| Example 61 | 1-1 | 1000 | 2-1 | 3.00 | 1.56 | 0.57 | 631 |
| Example 62 | 1-1 | 10000 | 2-1 | 3.00 | 1.57 | 0.59 | 630 |
| Example 63 | 1-1 | 100 | 2-1 | 0.1 | 1.56 | 0.61 | 770 |
| Example 64 | 1-1 | 100 | 2-1 | 1.0 | 1.55 | 0.63 | 701 |
| Example 65 | 1-1 | 100 | 2-1 | 10 | 1.54 | 0.64 | 592 |
| Example 66 | 1-1 | 100 | 2-1 | 20 | 1.51 | 0.65 | 552 |
| Example 67 | 1-1 | 100 | 2-1 | 40 | 1.50 | 0.66 | 501 |
| Example 68 | 1-2 | 100 | 2-1 | 3.0 | 1.52 | 0.61 | 630 |
| Example 69 | 1-3 | 100 | 2-1 | 3.0 | 1.53 | 0.61 | 632 |
| Example 70 | 1-4 | 100 | 2-1 | 3.0 | 1.51 | 0.64 | 631 |
| Example 71 | 1-5 | 100 | - | - | 1.54 | 0.59 | 802 |
| Example 72 | 1-5 | 100 | 2-1 | 3.0 | 1.57 | 0.57 | 630 |
| Example 73 | 1-6 | 100 | - | - | 1.49 | 0.65 | 803 |
| Example 74 | 1-6 | 100 | 2-1 | 3.0 | 1.52 | 0.63 | 631 |
| Example 75 | 1-7 | 100 | - | - | 1.51 | 0.62 | 803 |
| Example 76 | 1-7 | 100 | 2-2 | 3.0 | 1.54 | 0.60 | 631 |
| Example 77 | 1-8 | 100 | - | - | 1.46 | 0.68 | 804 |
| Example 78 | 1-8 | 100 | 2-2 | 3.0 | 1.49 | 0.66 | 632 |
| Example 79 | 1-9 | 100 | - | - | 1.50 | 0.63 | 803 |
| Example 80 | 1-9 | 100 | 2-3 | 3.0 | 1.53 | 0.61 | 632 |
| Example 81 | 1-10 | 100 | - | - | 1.45 | 0.69 | 802 |
| Example 82 | 1-10 | 100 | 2-3 | 3.0 | 1.48 | 0.67 | 631 |
| Comparative Example 5 | - | - | - | - | 1.00 | 1.00 | 1500 |

### (Examples 83 to 86)

Ethylene carbonate (EC) and dimethyl carbonate (DMC) were mixed in a volume ratio of 2/98, and to this mixture was added LiN(FSO₂)₂ (LiFSI) at a concentration of 1.0 mol/L to thereby prepare a basic electrolytic solution.

A non-aqueous electrolytic solution was prepared in the same manner as in Example 48 except that the types of the additives for the electrolytic solution and the amounts thereof added were changed as shown in Table 6, further, a battery was produced in the same manner as in Example 48 except that LiNi_{0.6}Mn_{0.2}CO_{0.2}O₂ (NMC622) was used as the positive electrode active material, and the battery was evaluated.

The results are shown in Table 6.

### (Comparative Example 6)

A non-aqueous electrolytic solution was prepared in the same manner as in Example 83 except that the additives were not used, and further, a battery was produced and evaluated.

The results are shown in Table 6.

**[Table 6]**

| | Additive (1) | Concentration (ppm) | Additive (2) | Concentration (mass%) | Battery characteristics | | Amount of metal precipitated |
|---|---|---|---|---|---|---|---|
| | | | | | Cycle characteristics (relative value when taking value of Comparative Example 6 as 1) | Amount of gas (relative value when taking value of Comparative Example 6 as 1) | Amount of Mn, ppm |
| Example 83 | 1-1 | 100 | - | - | 1.56 | 0.60 | 982 |
| Example 84 | 1-1 | 100 | 2-1 | 20 | 1.54 | 0.61 | 681 |
| Example 85 | 1-1 | 100 | 2-1 | 40 | 1.52 | 0.62 | 620 |
| Example 86 | 1-1 | 100 | 2-1 | 75 | 1.37 | 0.75 | 405 |
| Comparative Example 6 | - | - | - | - | 1.00 | 1.00 | 1850 |

Examples in Tables 1 to 6 show that use of the electrolytic solution provided in each of Examples improved cycle characteristics of the secondary battery and reduced the amount of gas generated and the amount of metal precipitated during the cycle.

### Industrial Applicability

Electrochemical devices including the electrolytic solution of the present disclosure, such as secondary batteries, can be used as various power supply such as a portable power supply and a power source for automobiles.

## Claims

1. An electrolytic solution comprising at least one compound represented by the following general formula (1) :
Rf¹OR (1)
wherein Rf¹ is a fluorinated alkyl group having 1 to 5 carbon atoms, and R is K or Na.

2. The electrolytic solution according to claim 1, wherein Rf¹ of the compound represented by the general formula (1) is any of the following formulas (1a) to (1e) :
(1a) CF₂HCF₂
(lb) CF₂HCF₂CH₂
(lc) CF₃CHFCF₂
(ld) CF₃CF₂CH₂
(le) CF₂HCF₂CF₂CF₂CH₂.

3. The electrolytic solution according to claim 1 or 2, wherein a content of the compound represented by the general formula (1) is 0.01 ppm to 10,000 ppm with respect to the whole electrolytic solution.

4. The electrolytic solution according to any one of claims 1 to 3, further comprising a compound represented by the following general formula (2):
Rf²ORf³ (2)
wherein Rf² and Rf³ are each independently a fluorinated alkyl group having 1 to 8 carbon atoms.

5. The electrolytic solution according to claim 4, wherein the compound represented by the general formula (2) is at least one selected from the group consisting of CF₂HCF₂CH₂OCF₂CF₂H, CF₂HCF₂CH₂OCF₂CHFCF₃, and CF₃CF₂CH₂OCF₂CF₂H.

6. The electrolytic solution according to claim 4 or 5, wherein a content of the compound represented by the general formula (2) is 0.1 to 90% by mass with respect to the whole electrolytic solution.

7. The electrolytic solution according to any one of claims 4 to 6, wherein the content of the compound represented by the general formula (1) is 0.0000001 to 10% by mass with respect to the compound represented by the general formula (2).

8. The electrolytic solution according to any one of claims 4 to 7, wherein the content of the compound represented by the general formula (2) is 0.1 to 75% by mass with respect to the whole electrolytic solution, and the content of the compound represented by the general formula (1) is 0.001 to 5% by mass with respect to the compound represented by the general formula (2).

9. The electrolytic solution according to any one of claims 1 to 8, wherein the compound represented by the general formula (1) is CF₂HCF₂CH₂ONa.

10. The electrolytic solution according to any one of claims 4 to 9, wherein the compound represented by the general formula (2) is CF₂HCF₂CH₂OCF₂CF₂H.

11. An electrochemical device comprising the electrolytic solution according to any one of claims 1 to 10.

12. A secondary battery comprising the electrolytic solution according to any one of claims 1 to 10.

13. A sodium ion secondary battery comprising the electrolytic solution according to any one of claims 1 to 10.
